# EUROPEAN PATENT APPLICATION

(11) **EP 4 086 831 A1**
(43) Date of publication of application: **09.11.2022**
(21) Application number: 22171831.5
(22) Date of filing: 05.05.2022
(51) Int. Cl.: G06Q 10/08, G01S 13/76, G01S 13/87

(54) **ULTRA-WIDEBAND, REAL TIME LOCATING SYSTEM**

(30) Priority: 05.05.2021 IT 202100011462
(71) Applicant: Engynya S.r.l., 47924 Rimini (IT)
(72) Inventor: DE ANGELI, Matteo, 47822 SANTARCANGELO DI ROMAGNA (IT)
(74) Representative: Conti, Marco

(57) **Abstract**

An ultra-wideband (UWB), real time locating system (RTLS) (1), comprises: a locating device (21), movable in a warehouse defining a workspace (20), where the locating device is configured to transmit and receive ultra-wideband (UWB) signals; a plurality of anchors (3), each configured to communicate with one or more of the other anchors (3) and to transmit and receive ultra-wideband (UWB) signals, where the anchors (3) are disposed at stationary positions in the workspace (20); each anchor (3) being configured to exchange a position signal (5) with the locating device (21), as a function of which it is possible to calculate a flight time of the position signal (6) to determine a distance of the locating device (21) from the anchor (3); an object (2) wearable on a hand of an operator (P), the locating device (21) being integrated in the wearable object (2).

## Description

This invention relates to an ultra-wideband real time locating system and method; this invention also relates to a warehouse and a glove.

The invention addresses the field of warehouse management for the location of objects such as trolleys or goods, for example. There are various types of locating systems, which vary in terms of the technology used and the methods for processing the data detected by a control unit of the system. For example, there are prior art locating systems based on ultra-wideband (UWB) technology. These systems traditionally include a plurality of anchors, stationary relative to a workspace and an RFID tag, positioned on the object to be located. In locating systems of this type, the plurality of anchors and the tag positioned on the object communicate with each other in order to identify the distance of the tag from each anchor of said plurality. Once the distance of the tag from one plurality of anchors (preferably at least four) of the plurality of anchors is known, a control unit determines the position of the object within the workspace with a high level of precision and reliability. Examples of these ultra-wideband UWB locating systems are described in the following patent documents: US2015355311, US2013063251, US9519047, US8674828 and in the Italian patent document 102018000003687 (in the name of the same Applicant).

Also known is the use of RFID tags in applications for tracking packages in a warehouse. Traditionally, the packages are tracked and identified using bar codes; for example, patent document US9895106B1 describes a system in which a bar code is associated with each package and operators are provided with a glove with an integrated bar code scanner. Traditional systems that use bar codes are not very reliable because the bar code can easily become illegible.

Patent document US7504949B1, on the other hand, describes a system for tracking packages in a warehouse using RFID tags. More specifically, it describes a system in which an RFID tag is associated with each package and the operator wears a glove in which an RFID reader is integrated or attached to read the RFID tag of the package being handled by the operator. This system requires that all packages to be tracked be provided with RFID tags and is therefore very expensive.

Other examples of real time locating systems are disclosed in patent documents US2019122174A1, US2014207615A, US2004099735A1 and US7152040B1; however, not even these documents provide a solution which is able to satisfy the needs of the market.

This invention has for an aim to provide an ultra-wideband, real time locating system and method to overcome the above mentioned disadvantages of the prior art. This aim is fully achieved by the system and method of this disclosure as characterized in the appended claims.

This disclosure provides a real time locating system (RTLS). More specifically, the locating system of this disclosure is an ultra-wideband (UWB) system.

The locating system comprises(at least) one locating device, movable in a warehouse defining a workspace, where the locating device is configured to transmit and receive ultra-wideband (UWB) signals. In un example embodiment, the locating device may include an RFID tag.

The locating system comprises a plurality of anchors, each configured to communicate with one or more of the other anchors of the plurality and to transmit and receive ultra-wideband (UWB) signals. The anchors of the plurality are disposed at stationary positions in the workspace. Each anchor of the plurality of anchors is configured to exchange a position signal with the locating device, as a function of which it is possible to calculate a flight time of the position signal to determine a distance of the locating device from the anchor.

The system comprises a processing unit configured to determine a position of the locating device as a function of the distance of the locating device from the plurality of anchors.

The system comprises an object that is wearable on an operator's hand; the locating device is integrated in the wearable object.

The system comprises a memory containing a map of the warehouse, preferably in three-dimensional coordinates. The map of the warehouse represents a position of each package of a plurality of packages present in the warehouse. Preferably, each package is positioned on a certain shelf of the warehouse and is therefore characterized by specific 3D coordinates. The map of the warehouse includes the respective 3D coordinates for each package. In other embodiments, the packages might be positioned on a warehouse floor or on a pallet in the warehouse.

The processing unit is configured to compare the position of the locating device with the map of the warehouse to derive information to identify one or packages which are being handled by the operator. Indeed, the processing unit recognizes the package nearest the operator's hand as a function of the real time location of the object worn on the operator's hand and as a function of the map of the warehouse and derives information representing the fact that the package is being handled by the operator. This recognition is possible thanks to the high precision of ultra-wideband (UWB) location.

More specifically, the processing unit is configured to calculate (preferably in real time) a distance between the position of the locating device and the position of one or more packages of a plurality of packages present in the warehouse; it should be noted that the position of the one or more packages is provided by the map of the warehouse. If the distance, for one of the plurality of packages, is less than a predetermined threshold value, the processing unit is configured to enter an identification code of that package in a first list, representing the packages that have been handled by the operator. More specifically, the processing unit retrieves the identification code from the memory, where it is stored in association with the respective position on the map. Thus, the first list is updated by adding a new identification code each time the operator's hand comes within the predetermined distance from the package.

Preferably, the processing unit has access to a second list, representing a plurality of packages still to be handled; the second list includes identification codes corresponding to the packages still to be handled. The processing unit is configured to check whether the identification code of the package being handled by the operator (identified by the position of the object wearable on the operator's hand) matches a code on the second list; if it does, it is configured to update the second list by deleting the matching identification code from it (in effect, the package is considered as being handled and is removed from the list of packages still to be handled); if it does not, it is configured to emit an error signal. The error signal indicates that the package handled, or picked up, was not on the list of packages still to be handled. The error signal may be conveyed to the operator in the form of a warning light (for example, red) on the wearable object; The error signal may be conveyed to the operator in the form of an acoustic signal emitted by an acoustic emitter associated with the wearable object; alternatively, the error signal may be conveyed to the operator through a further appliance worn by the operator, such as earphones or an augmented reality visor (for example, "Google glass", "Microsoft Hololens" or a similar device).

In an embodiment, the processing unit may, after sending the error signal, give the operator the opportunity to put the erroneously picked up package back on the respective shelf and to delete the corresponding record from the first list.

Preferably, the system comprises a user interface connected to the processing unit. The user interface is configured to provide the operator with information identifying all or some of the packages of the second list. Preferably, the user interface includes an electronic interface display integrated in the object wearable by the operator. In another embodiment, the user interface might include an augmented reality visor wearable by the operator (for example, "Google glass", "Microsoft Hololens" or a similar device). It should be noted that the user interface may be the same interface that is configured to send the error or it may be a different interface.

It should be noted that in other embodiments, the user interface might not be provided and the operator might receive information identifying the packages to be picked up (that is, those on the second list) in the form of a printed hard copy (that is, a packing list).

In an embodiment, the processing unit is configured to select from the second list a package to be handled next as a function of the position of the locating device on the map of the warehouse, and to show to the operator, through the user interface, an information item identifying the package to be handled next. More specifically, the user interface does not show the operator the full list of the packages on the second list but only a subset of them (preferably only one) which is selected as a function of the operator's position. For example, the package to be handled next might be selected as the package on the second list closest to the current position of the locating device.

Preferably, the wearable object is a glove. In other embodiments, the wearable object is a wristband or a ring.

In an embodiment, the system comprises a first and a second locating device and a first and a second object wearable by the operator (for example, a first and a second glove). The first locating device is integrated in the first object (for example, in the first glove) and the second locating device is integrated in the second object (for example, in the second glove). This is useful to improve the precision of the system. In effect, the processing unit may be made to recognize a package as having been handled by the operator only when both the first and the second wearable object are moved within a predetermined distance of the package. In this embodiment, there is preferably only one user interface integrated in the first or the second glove.

In an embodiment, in which the wearable object is a glove, the system may also include one or more contact sensors positioned on the fingers of the glove (specifically, the fingertips) to detect when the package has effectively been grasped. The one or more sensors are connected to the processing unit. The processing unit may derive the information identifying one or more packages handled by the operator also as a function of the signals captured by the one or more sensors. For example, the processing unit may enter the identification code of the package in the first list, representing the packages that have been handled by the operator, not only when the distance between the position of the locating device and the position of the package is less than a threshold value but also when it receives from the one or more sensors a signal that confirms that the operator has effectively handled the package.

In an embodiment, the information identifying the one or more packages handled by the operator is derived by the processing unit also as a function of the fact that the package is later placed in a dedicated area of the workspace (for example, a commissioning trolley or a pallet). More specifically, a weight sensor may be associated with the dedicated area to detect whether a package is placed on it. In this embodiment, the processing unit enters the identification code of the package in the first list, representing the packages that have been handled by the operator, not only when the distance between the position of the locating device and the position of the package is less than a threshold value but also when it receives from the weight sensor a signal that confirms that the operator has effectively placed the package in the dedicated area.

The processing unit may be configured to send a confirmation signal responsive to the package being picked up (detected thanks to the locating device being moved close to the position of the package and/or thanks to contact sensors on the glove). The processing unit may send the confirmation signal to the user interface which conveys it to the operator in the form of a light signal, an acoustic signal through earphones or emitted by the wearable object, or a signal on an augmented reality visor.

The processing unit may be configured to send a further confirmation signal responsive to the package being placed in the dedicated area (detected thanks to the locating device being moved close to the dedicated area and/or thanks to contact sensors on the glove). The processing unit may send the further confirmation signal to the user interface which conveys it to the operator in the form of a light signal, an acoustic signal through earphones or emitted by the wearable object, or a signal on an augmented reality visor.

In an embodiment, the map of the warehouse represents one or more restricted areas, and the processing unit is configured to send an alarm signal if the locating device enters the one or more restricted areas. The alarm signal may be sent to the user through the user interface, and/or it may be an alarm signal sent to a central alarm system of the warehouse. The restricted areas might be high-risk areas (for example, areas where moving machinery is at work). This embodiment is thus useful for improving the safety of the system. It should be noted that this embodiment, in which the warehouse map represents one or more restricted areas, may also be applied to a system where the warehouse map does not represent the position of the packages and where the processing unit is not configured to derive information to identify one or more packages handled by the operator. In this context, this disclosure also provides an ultra-wideband real time locating system comprising: a locating device, movable in a warehouse defining a workspace, where the locating device is configured to transmit and receive ultra-wideband (UWB) signals; a plurality of anchors, each configured to communicate with one or more of the other anchors of the plurality and to transmit and receive ultra-wideband (UWB) signals, where the anchors of the plurality are disposed at stationary positions in the workspace; each anchor of the plurality of anchors being configured to exchange a position signal with the locating device, as a function of which it is possible to calculate a flight time of the position signal to determine a distance of the locating device from the anchor; a processing unit configured to determine a position of the locating device as a function of the distance of the locating device from the plurality of anchors; an object wearable on an operator's hand, the locating device being integrated in the wearable object, a memory containing a map of the warehouse in three-dimensional coordinates, the warehouse map representing one or more restricted areas, where the processing unit is configured to send an alarm signal if the locating device enters the one or more restricted areas.

In an example embodiment, the system (or the glove) of this disclosure could be used in a person and trolley or person and vehicle anti-collision system. Examples of such person and trolley or person and vehicle anti-collision systems are provided in Italian patent documents 102018000003687 and 102018000003692, in the name of the present Applicant and incorporated herein by reference. It is expressly understood that all the features of the anti-collision systems described in Italian patent documents 102018000003687 and 102018000003692 can be applied to the electronic smart labels of this embodiment.

As regards the anchors, these may be integrated in the warehouse ceiling and/or floor.

In an embodiment, the anchors are mounted on warehouse shelves; more specifically, they may be mounted on shelf posts and/or rails of the warehouse. By "posts" is meant vertical members of the shelves and by "rails" is meant horizontal members of the shelves.

In an embodiment, the anchors (or some of them) are defined by (or are) a corresponding plurality of electronic smart labels. Each electronic smart label includes an enclosure connectable to a warehouse shelf (specifically, a bracket or a rail); an electronic label display mounted on the enclosure; a processor located in the enclosure and configured to receive label data and to show an image representing the label data on the electronic label display. Further, each electronic smart label is also configured to transmit and receive ultra-wideband (UWB) position signals to perform the function of an anchor. As regards the electronic smart labels configured to perform the function of anchors of the locating system, these may be characterized by one or more of the aspects described in Italian patent document 102020000024826 in the name of the present Applicant and incorporated herein by reference. It is expressly understood that all the features of the electronic smart labels described in Italian patent document 102020000024826 can be applied to the electronic smart labels of this embodiment.

Further, the warehouse may include a plurality of electronic non-smart (or traditional) labels which also include an enclosure, an electronic label display and a processor, but which are not configured to transmit and receive ultra-wideband (UWB) position signals.

This disclosure also provides a warehouse, comprising: a plurality of shelves; a plurality of packages, placed on the plurality of shelves; a real-time locating system (RTLS) according to one or more of the aspects of the invention.

This disclosure also provides a glove (or more generally speaking, an object wearable on an operator's hand), comprising a locating device that is configured to transmit and receive ultra-wideband (UWB) signals. The glove may also include an electronic display, configured to show one or more information items to an operator. More specifically, these information items may indicate actions to be carried out and/or the next package to be handled.

This disclosure also provides a method for real-time location (RTLS).

The method comprises a step of preparing a plurality of anchors. The anchors are disposed at stationary positions in a warehouse defining a workspace and are configured to transmit and receive ultra-wideband (UWB) signals.

The method comprises a step of preparing a locating device, movable in the warehouse and configured to transmit and receive ultra-wideband (UWB) signals. The locating device is integrated in an object that is wearable on an operator's hand.

The method comprises a step of sending at least one ultra-wideband (UWB) position signal from the locating device to one or more anchors of the plurality of anchors or vice versa.

The method comprises a step of determining a distance of the locating device from one or more anchors of the plurality of anchors by calculating a flight time of the position signal by means of a processing unit.

The method comprises a step of determining a position of the locating device as a function of the distance of the locating device from the plurality of anchors.

The method comprises a step of comparing the position of the locating device with a map of the warehouse in three-dimensional coordinates, the map of the warehouse representing a position of each of a plurality of packages present in the warehouse.

The method comprises a step of deriving information to identify one or more packages being handled by the operator among the plurality of packages.

More specifically, the processing unit calculates a distance between the position of the locating device and the position of one or more packages of a plurality of packages present in the warehouse and, if the distance, for one of the plurality of packages, is less than a predetermined threshold value, it enters an identification code of that package (stored in the map in association with the respective position) in a first list, representing the packages that have been handled by the operator.

Preferably, the method comprises a step of communicating to the operator, through a user interface, information items identifying the package to be handled next. In an embodiment, the user interface is also integrated in the object wearable on the operator's hand. The processing unit also checks whether the package being handled (that is, the package being approached by the operator's hand) is the next package the user interface is telling the operator to handle.

Preferably, the method comprises a step of selecting the package to be handled next from a (second) list of packages still to be handled, as a function of the position of the locating device on the map of the warehouse. These and other features will become more apparent from the following description of a preferred embodiment, illustrated by way of non-limiting example in the accompanying drawings, in which:

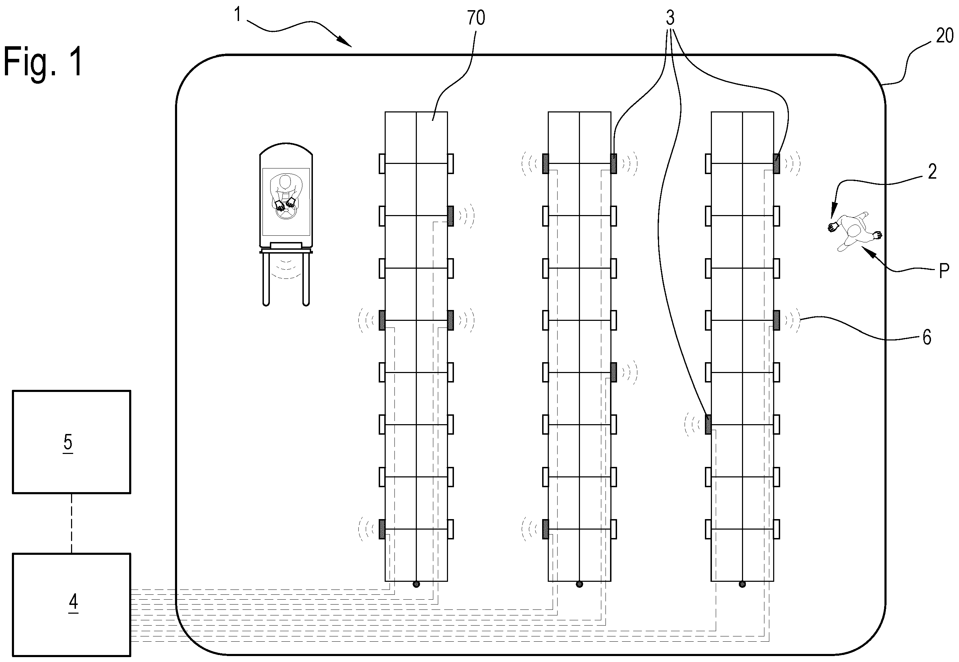

- Figure 1 illustrates a real time locating system according to this disclosure;

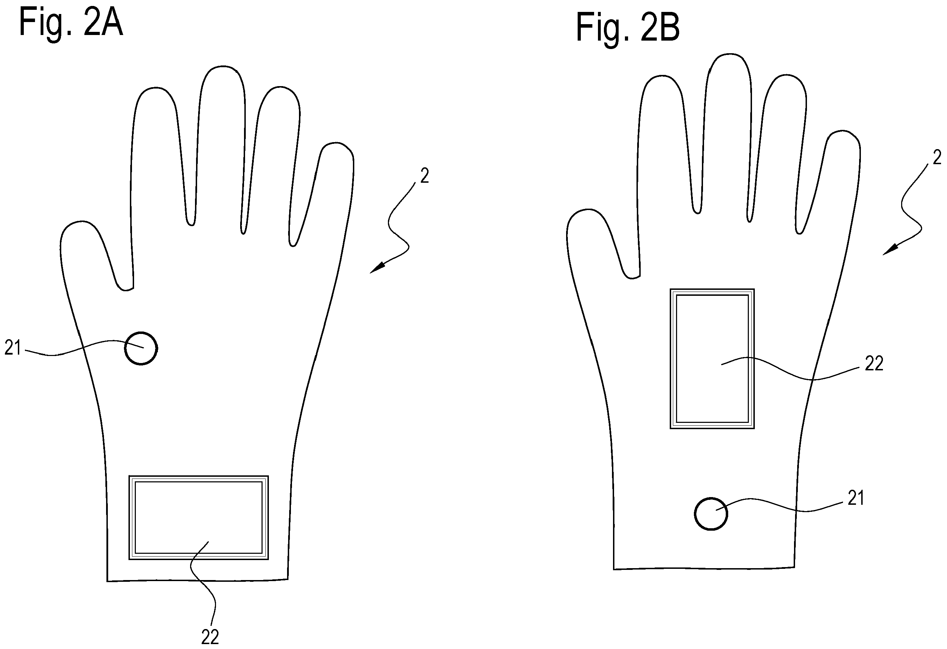

- Figure 2A illustrates a glove which is wearable on an operator's hand and in which a locating device of the locating system of Figure 1 is integrated;
- Figure 2B illustrates a variant embodiment of the glove of Figure 2A;

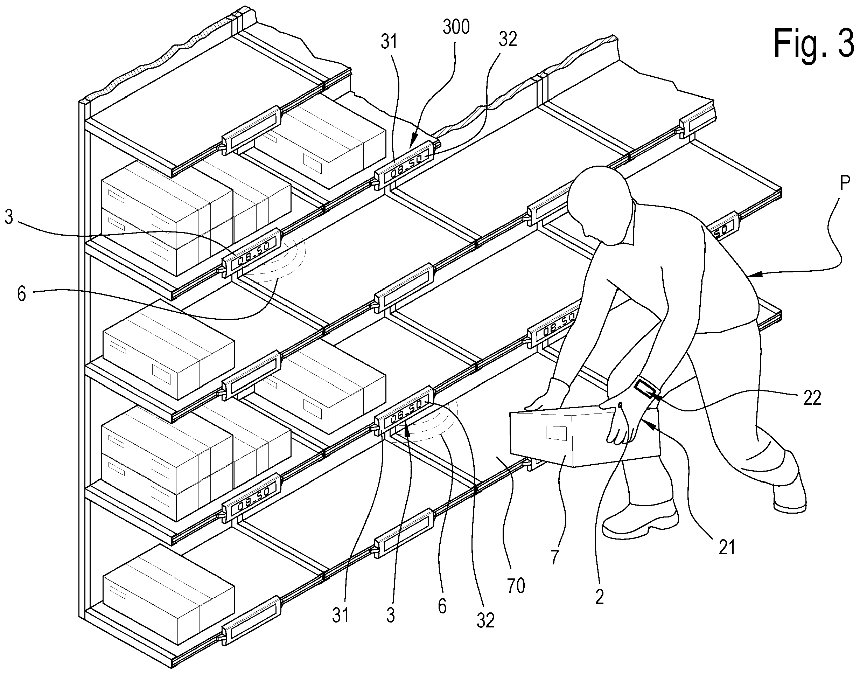

- Figure 3 illustrates a detail of the locating system of Figure 1.

According to an aspect of the invention, the numeral 1 denotes a real-time locating system.

The system 1 is applicable to a warehouse defining a workspace 20. The warehouse comprises a plurality of shelves 70. Preferably, the shelves 70 are positioned at a plurality of different vertical heights. The warehouse also comprises a plurality of packages 7, positioned on the shelves 70.

The system 1 comprises a locating device 21. The locating device 21 is integrated in an object 2 that is wearable on the hand of an operator P, specifically a glove. The locating device 21 is configured to transmit and receive ultra-wideband (UWB) signals.

The system 1 comprises a plurality of anchors 3, each configured to communicate with one or more of the other anchors 3 and to transmit and receive ultra-wideband (UWB) signals. The anchors 3 of the plurality are disposed at stationary positions in the workspace 20. Each anchor 3 is configured to exchange position signals 6 with the locating device 21. The distance of the locating device 21 from the anchor 3 can be determined as a function of the flight time of the position signal 6 between the locating device 21 and the anchor 3.

The system 1 comprises a processing unit 4. The processing unit 4 is connected to the anchors 3 of said plurality. In an embodiment, each anchor 3 calculates the flight time of the position signal 6 exchanged with the locating device 21 and transmits that flight time to the processing unit 4, which determines the distance of the locating device 21 from the anchor 3. In another embodiment, the anchor 3 itself calculates the distance between itself and the locating device 21 as a function of the flight time of the position signal 6.

The processing unit 4 is also configured to determine a position of the locating device 21 (in the workspace 20) as a function of the distance of the locating device 21 from the plurality of anchors 3.

The system 1 comprises a memory 5, connected to the processing unit 4; in an embodiment, the memory 5 is connected remotely to the processing unit 4. The memory 5 contains a map of the warehouse in three-dimensional coordinates; the map of the warehouse represents a position of each package 7 of a plurality of packages 7 present in the warehouse. In other words, the packages (that is, the goods) present in the warehouse are mapped and their positions are stored in the memory 5. Moreover, for each package 7, the memory 5 contains a respective identification code (which may be a numeric, alphanumeric or other type of code).

The processing unit 4 is configured to compare the position of the locating device 21 with the map of the warehouse to derive information to identify one or packages 7 which are being handled by the operator P. More specifically, the processing unit 4 recognizes that the operator P is handling a package 7 when their hand (which is wearing the locating device 21) moves to within a predetermined threshold value from the position of the package 7.

In an embodiment, the processing unit 4, once it has recognized that the operator P is handling a package 7, enters the identification code thereof in a first list, representing the packages 7 that have been handled by the operator.

The system 1 (or the locating device 21) also includes a user interface 22. Preferably, the user interface 22 is also integrated in the object 2 wearable by the operator P (specifically in the glove). The processing unit 4 is connected to the user interface 22 and is configured to send to the operator P, through the user interface, information representing actions to be performed, specifically information identifying a package 7 to be handled next (that is to say, to be picked up from the corresponding shelf 70). The processing unit 4 may be made to select the package 7 to be handled next from a list of packages to be handled (or picked up) as a function of the given position of the locating device 21.

In an embodiment, the user interface 22 is also configured to provide the operator P with feedback regarding the package 7 being handled. More specifically, if the package 7 being handled is not on the (second) list of packages to be handled, the user interface 22 issues an error signal (for example, a red light or an acoustic signal at a first frequency); conversely, if the package being handled is on the (second) list of packages to be handled, the user interface 22 may issue an approval signal (for example, a green light or an acoustic signal at a second frequency).

In an embodiment, where the wearable object 2 is a glove, the locating device 21 is positioned in a zone interposed between the glove fingers and the user interface 22. In another embodiment, where the wearable object 2 is a glove, the user interface 22 is positioned in a zone interposed between the glove fingers and the locating device 21.

It should be noted that if the user interface 22 includes an electronic display and the wearable object 2 is a glove, it may be oriented substantially parallel, or substantially perpendicularly, to the glove fingers. More specifically, orienting the display substantially perpendicularly to the glove fingers is a good feature in terms of ergonomics.

The processing unit 4 is also configured to update the list of packages 7 to be handled (or picked up) by removing the codes corresponding to the packages 7 that are handled by the operator P. Thus, after the operator has handled (or picked up) a package 7, that package will no longer appear on the list of packages 7 to be handled.

In an embodiment, the system 1 comprises a plurality of electronic smart labels which act as anchors 3; in effect, the electronic smart labels are configured to exchange ultra-wideband (UWB) position signals 6 with the locating devices 21. The electronic smart labels 3 are mounted on the shelves 70. The system 1 may also comprise a plurality of traditional electronic labels 300. The traditional electronic labels 300 do not perform the function of exchanging ultra-wideband (UWB) position signals 6.

Each electronic smart label (as well as each traditional electronic label 300) includes an enclosure 31 which may be mounted on a rail especially made on a corresponding shelf 70. Each electronic smart label (as well as each traditional electronic label 300) also includes an electronic display 32. The electronic display 32 may show the operator P information relating to the packages 7 positioned on the corresponding shelf 70 (for example, description or code of the package 7) to help identify the packages. The electronic display 32 may also show information relating to the shelf 70 (for example, the number of the shelf 70).

## Claims

1. An ultra-wideband (UWB), real time locating system (RTLS) (1), comprising
- a locating device (21), movable in a warehouse defining a workspace (20), where the locating device (21) is configured to transmit and receive ultra-wideband (UWB) signals;
- a plurality of anchors (3), each configured to communicate with one or more of the other anchors of the plurality (3) and to transmit and receive ultra-wideband (UWB) signals, where the anchors of the plurality (3) are disposed at stationary positions in the workspace (20); each anchor (3) of the plurality of anchors being configured to exchange a position signal (6) with the locating device (21), as a function of which it is possible to calculate a flight time of the position signal (6) to determine a distance of the locating device (21) from the anchor (3);
- a processing unit (4) configured to determine a position of the locating device (21) as a function of the distance of the locating device (21) from the plurality of anchors (3);
**characterized in that** it also comprises:
- an object (2) wearable on a hand of an operator (P), the locating device (21) being integrated in the wearable object (2),
- a memory (5) containing a map of the warehouse in three-dimensional coordinates, the map of the warehouse representing a position of each package (7) of a plurality of packages (7) present in the warehouse,
wherein the processing unit (4) is configured to compare the position of the locating device (21) with the map of the warehouse to derive information to identify one or packages (7) which are being handled by the operator (P).

2. The system (1) according to claim 1, wherein the processing unit (4) is configured for:
calculating a distance between the position of the locating device (21) and
the position of one or more packages (7) of a plurality of packages present in the warehouse,
if the distance, for one of the plurality of packages (7), is less than a predetermined threshold value, entering an identification code of that package in a first list, representing the packages (7) that have been handled by the operator (P).

3. The system (1) according to claim 2, wherein the processing unit (4) has access to a second list, representing a plurality of packages (7) still to be handled and including corresponding identification codes of the packages (7) still to be handled, wherein the processing unit (4) is configured to check whether the identification code of the package (7) being handled by the operator (P) matches a code on the second list and,
if it does, is configured to update the second list by deleting the matching identification code from it,
if it does not, it is configured to emit an error signal.

4. The system (1) according to claim 3, comprising a user interface (22) connected to the processing unit (4) and configured to communicate to the operator (P) information identifying all or some of the packages (7) on the second list.

5. The system (1) according to claim 4, wherein the user interface (22) includes an electronic interface display integrated in the object (2) wearable by the operator (P).

6. The system (1) according to claim 4, wherein the user interface (22) includes an augmented reality visor and/or earphones wearable by the operator (P).

7. The system (1) according to any one of claims 3 to 6, wherein the processing unit (4) is configured to select from the second list a package (7) to be handled next as a function of the position of the locating device (21) on the map of the warehouse, and to show to the operator, through the user interface (22), an information item identifying the package (7) to be handled next.

8. The system (1) according to any one of the preceding claims, wherein the map of the warehouse also represents one or more restricted areas, wherein the processing unit is configured to send an alarm signal if the locating device (21) enters the one or more restricted areas.

9. The system (1) according to any one of the preceding claims, wherein the plurality of anchors (3) are defined by a corresponding plurality of electronic smart labels, each of which includes:
- an enclosure (31) connectable to a shelf (70) of the warehouse;
- an electronic label display (32) mounted on the enclosure (31);
- a processor located in the enclosure (31) and configured to receive label data and to show on the electronic tag display (32) an image representing the label data,
wherein each electronic smart label is also configured to transmit and receive ultra-wideband (UWB) position signals.

10. A warehouse comprising:
- a plurality of shelves (70);
- a plurality of packages (7), placed on the plurality of shelves (70);
- a real time locating system (1), or RTLS, according to any one of the preceding claims.

11. A glove comprising a locating device (21), wherein the locating device (21) is configured to transmit and receive ultra-wideband (UWB) signals.

12. The glove according to claim 11, also comprising:
- an electronic display, configured to show one or more information items to an operator (P), and/or
- one or more contact sensors, positioned at respective ends of the glove fingers.

13. A method for real-time location (RTLS), comprising the following steps:
- preparing a plurality of anchors (3), disposed at stationary positions in a warehouse defining a workspace and configured to transmit and receive ultra-wideband (UWB) signals;
- preparing a locating device (21), movable in the warehouse and configured to transmit and receive ultra-wideband (UWB) signals;
- sending at least one ultra-wideband (UWB) position signal (6) from the locating device (21) to one or more anchors of the plurality of anchors (3), or vice versa;
- determining a distance of the locating device (21) from one or more anchors of the plurality of anchors (3) by calculating a flight time of the position signal (6) by means of a processing unit (4),
- determining a position of the locating device (21) as a function of the distance of the locating device (21) from the plurality of anchors (3);
**characterized in that** the locating device (21) is integrated in an object (2) which is wearable on a hand of an operator (P), and **in that** it further comprises the following steps:
- comparing the position of the locating device (21) with a map of the warehouse in three-dimensional coordinates, the map of the warehouse representing a position of each of a plurality of packages (7) present in the warehouse,
- deriving information to identify one or more packages (7) being handled by the operator (P) among the plurality of packages (7).

14. The method according to claim 13, comprising a step of communicating to the operator (P), through a user interface (22), information items identifying the package to be handled next.

15. The method according to claim 14, comprising a step of selecting the package to be handled next from a list of packages still to be handled, as a function of the position of the locating device (21) on the map of the warehouse.
